# EUROPÄISCHE PATENTSCHRIFT

(11) **EP 1 062 776 B1**
(45) Veröffentlichungstag und Bekanntmachung des Hinweises auf die Patenterteilung: **17.11.2004**
(21) Anmeldenummer: 99911700.5
(22) Anmeldetag: 23.02.1999
(51) Int. Cl.: H04L 12/44

(54) **DATENBUS FÜR MEHRERE TEILNEHMER**
DATA BUS FOR A PLURALITY OF NODES
BUS DE DONNEES POUR PLUSIEURS NOEUDS

(30) Priorität: 10.03.1998 DE 19810294
(43) Veröffentlichungstag der Anmeldung: 27.12.2000
(73) Patentinhaber: Bayerische Motoren Werke Aktiengesellschaft, 80809 München (DE)
(72) Erfinder: PELLER, Martin, D-82256 Fürstenfeldbruck (DE)
(74) Vertreter: Wesel-Mair, Julia
(86) Internationale Anmeldenummer: PCT/EP1999/001177
(87) Internationale Veröffentlichungsnummer: WO 1999/046898

(56) Entgegenhaltungen:
- WO-A-90/09710
- H.TOMINAGA ET AL.: "A NETWORK ARCHITECTURE WITH DISTRIBUTED SWITCHING FUNCTION FOR OPTICAL FIBER LINKS" PROCEEDINGS COMPUTER NETWORKS COMPCON 82 FALL, 20. - 23. September 1982, Seiten 478-483, XP002107869 WASHINGTON US

## Beschreibung

Die Erfindung bezieht sich auf einen Datenbus für mehrere Teilnehmer, die über mindestens eine elektrische Leitung Datentelegramme untereinander austauschen.

Die schaltungstechnische Realisierung eines derartigen Datenbusses ist in Form einer Open-Collector-Schaltung bekannt (US 5,684,831). Eine Open-Collector-Schaltung hat den Nachteil, daß bei hohen Übertragungsraten und vielen Busteilnehmern ein relativ kleiner Widerstandswert als Kollektorwiderstand eingesetzt werden muß, um eine ausreichende Flankensteilheit der in Pulsform vorliegenden Signaltelegramme zu erzielen. Das führt zu hohen Strömen und der Notwendigkeit des Einsatzes von Leistungstransistoren und -widerständen sowie zu hohen Verlustleistungen.

Der Erfindung liegt die Aufgabe zugrunde, einen Datenbus der eingangs genannten Art zu schaffen, der auch bei einer großen Zahl von Busteilnehmern mit schaltungstechnisch geringem Aufwand eine störungsfreie Buskommunikation ermöglicht.

Die Erfindung löst diese Aufgabe mit den Merkmalen des Patentanspruchs 1.

Zentrales Element des erfindungsgemäßen Datenbusses ist das logische Entscheidungsglied, auf dessen Eingänge die Signalausgänge der Busteilnehmer geführt sind. Das Entscheidungsglied erfordert bei seinem Einsatz keine aufwendigen Signalformbearbeitungseinrichtungen. Auch ist der erforderliche Leistungsbedarf auch bei einer großen Anzahl von Teilnehmern gering.

Das Entscheidungsglied überträgt die Signale in ihrer Form unverändert sowohl zu den anderen Teilnehmern, als auch zum sendenden Teilnehmer zurück. Im Gegensatz dazu wird bei einem aus der WO 90/09710 A bekannten Datenbus der an einem Eingang eines beliebigen Tores anstehende Signalstrom nur an die Ausgänge aller anderen Tore weitergegeben. Die Empfänger der anderen Tore werden für die Dauer des Signalstroms gegen einlaufende Signale blockiert. Dieser Datenbus unterscheidet sich in seiner Funktion grundsätzlich vom erfindungsgemäßen, da es dem jeweils sendenden Teilnehmer nur beim erfindungsgemäßen Datenbus möglich ist, anhand des zurückgefieferten Signals den Anfang und das Ende des Sendebetriebs zu erkennen.

Ausgestaltungen der Erfindung sind sowohl mit Teilnehmern möglich, die elektrische Ausgangstelegramme liefern, als auch mit Teilnehmern, die optische Ausgangssignale erzeugen. Die zuletzt genannten Teilnehmer sind über opto-elektrische Wandler in der Weise am Datenbus angeschlossen, daß die Signalausgänge der Teilnehmer über je einen derartigen Wandler auf das Entscheidungsglied geführt sind und der Ausgang des Entscheidungsglieds über einen gemeinsamen elektrisch-optischen Wandler oder aber über individuelle derartige Wandler auf die Eingänge der Teilnehmer geführt ist.

Ein derartiger Datenbus ist aus dem Artikel "A Network Architecture with Distributed Switching Function for Optical Fiber Links", Proceedings Computer Networks Compcon 82 Fall, 10.-23. September 1982, p.478-483, XP002107869, bekannt. Gerade bei einer Vielzahl von Teilnehmern ist der Leistungsbedarf abhängig von der Zahl der Teilnehmer hoch, da dieser Datenbus physikalisch ein derartiges integriertes Entscheidungsglied nicht enthält. Bei diesem Datenbus ist jeder Teilnehmer mit seinem Ausgang an den Eingängen aller anderen Teilnehmer angeschlossen mit der Folge eines hohen Ausgangsleistungsbedarfs jedes Teilnehmers gerade bei einer Vielzahl von Teilnehmern, da dieser Bedarf mit der Zahl der Teilnehmer steigt.

Im Gegensatz dazu ist bei der Erfindung der Leistungsbedarf innerhalb des Stemkopplers unabhängig von der Zahl der Teilnehmer und aufgrund der Verwendung eines physikalischen Entscheidungsgliedes gering.

Für einen Datenbus, der als Open-Collector-Schaltung ausgebildet ist, ist es bekannt, Signalformbearbeitungseinrichtungen vorzusehen (vgl.US 5,684,831 A). Dabei ist für jeden Teilnehmer eine derartige Einrichtung vorgesehen. Die erfindungsgemäße Ausbildung des Datenbusses mit einem logischen Entscheidungsglied erlaubt es nun, den schaltungstechnischen Aufwand drastisch zu reduzieren. Es ist nur noch erforderlich, zwischen dem Entscheidungsglied und den Eingängen der Teilnehmer eine einzige Signalaufbereitungsschaltung anzuordnen, die das Ausgangssignal des Entscheidungsglieds hinsichtlich der Pulsform modelliert.

Dabei kann es sich um eine Angieichung der Form des Ausgangssignals an die Form der Eingangssignale oder aber auch um eine Anpassung handeln, wie sie in der US 5,684,831 A beschrieben ist. Dabei werden die Anstiegsflanken abgeflacht, um die Nutzsignale von hochfrequenten Störsignalen mit extremer Flankensteilheit unterscheiden zu können.

Schließlich können auch bei weiteren Ausführungsformen der Erfindung zwischen dem Ausgang der Signalaufbereitungsschaltung und zumindest einem Teil der Teilnehmer weitere Entscheidungsglieder angeordnet sein. Damit wird es möglich, bestimmte Abschnitte des Datenbusses bedarfsweise abzutrennen, um beispielsweise einen fehlerhaft arbeitenden Busteilnehmer abzutrennen oder aber mehrere Busteilnehmer in den Sleep-mode zu versetzen.

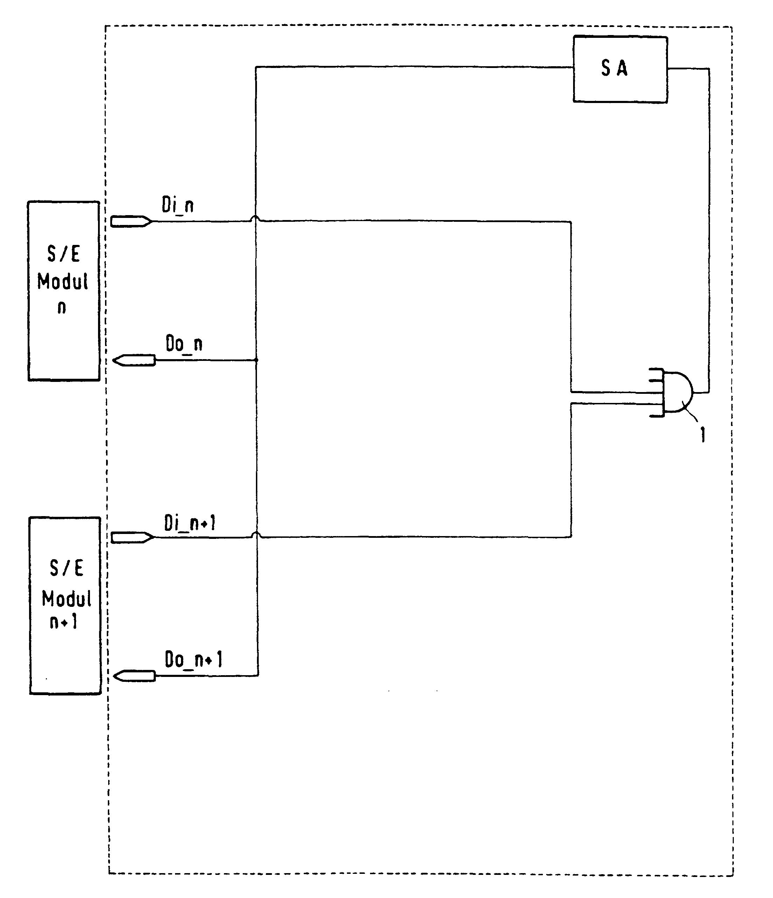

Anhand der Zeichnung ist die Erfindung weiter erläutert. Die einzige Figur zeigt schematisch den Aufbau eines erfindungsgemäßen Datenbusses, der für eine Vielzahl von Busteilnehmem mit geringem schaltungstechnischen Aufwand eine sichere Buskommunikation erreicht.

Ein ausschnittsweise gezeigter Datenbus dient dazu, Teilnehmer miteinander zu verbinden, die optische Telegramme liefern. Die Telegramme der Teilnehmer (der Übersichtlichkeit halber sind zwei Teilnehmer Tₙ und Tₙ₊₁ angedeutet) sind auf Eingänge von optoelektronischen Signalwandlem S/Eₙ und S/Eₙ₊₁ als Eingangssignale geführt. Die elektrischen Ausgangssignale (Di_{_n}, Di_{_n+1}) dieser Wandler werden mit einem UND-Gatter 1 verknüpft. Die Zahl der Ein- und Ausgänge des Gatters entspricht der Anzahl der Busteilnehmer. Der Ausgang 2 des UND-Gatters1 treibt alle Eingänge (Doₙ, Doₙ₊₁) der Wandler S/Eₙ und S/Eₙ₊₁. Diese liefern pulsförmige optische Ausgangssignale, die über die nicht gezeigten optischen Übertragungsstrecken diese Telegramme zu den Teilnehmern liefern.

Auf diese Weise erhält jeder Teilnehmer sowohl alle Telegramme, die von den anderen Teilnehmern aufgegeben werden als auch sein eigenes Telegramm zurück.

Wie bereits ausgeführt, hat das UND-Gatter 1 einen wesentlich geringeren Leistungsbedarf als die eingangs genannten Open-Collector-Schaltung.

Ebenfalls gezeigt ist die Verwendung einer Signalaufbereitungseinrichtung SA am Ausgang des UND Gatters 1. Dadurch können beispielsweise Signalformverzerrungen, wie sie durch opto-elektische Wandler (S/Eₙ, S/Eₙ₊₁) entstehen können, beseitigt. Handelt es sich beispielsweise um NRZ (non-retum-to-zero) codierte Signale, die durch den Wandler S/E eine Verzerrung von bis zu 30% der Signallänge erfahren, können diese wieder in eine Form ohne Pulsverzerrung gebracht werden.

Zur Signalaufbereitung in der Einrichtung SA kann z.B. das gleiche Abtastverfahren verwendet werden, das auch für die einzelnen Teilnehmer zum Einsatz kommt. Möglich ist auch, ein spezielles Signalaufbereitungsverfahren zu verwenden, das die speziellen Randbedingungen im Datenbus berücksichtigt. Dadurch wird die Datenübertragung wesentlich robuster. Es ist möglich kurze Glitches herauszufiltern. Die Anforderungen an das Abtastverfahren in den einzelnen Teilnehmern können niedriger angesetzt werden bzw. die Toleranz gegenüber Pulsverzerrungen auf einer Übertragungsstrecke wächst. Das Abtastverfahren ist deutlich weniger anfällig gegenüber Quartzjitter. Bei gleicher Robustheit können Quarze mit niedrigerer Frequenz verwendet werden, wodurch sich Kostenvorteile ergeben.

## Patentansprüche

1. Datenbus für mehrere Teilnehmer (Tₙ, Tₙ₊₁), die über mindestens eine elektrische Leitung Datentelegramme untereinander austauschen, **gekennzeichnet durch** folgende Merkmale:
der Datenbus ist sternförmig aufgebaut und weist einen Sternkoppler (K) auf,
die Eingangssignale des Stemkopplers liegen in elektrischer Form vor, der Stemkoppler enthält ein logisches Entscheidungsglied (1),
an den Eingängen des Entscheidungsglieds sind die Ausgänge (Di) der Teilnehmer angeschlossen und ihre Ausgangssignale als Eingangssignale auf das Entscheidungsglied geführt,
der Ausgang des Entscheidungsglieds ist über eine elektrische Leitung innerhalb des sternkopplers parallel an den Eingängen (Do) der Teilnehmer angeschlossen,
zwischen dem Entscheidungsglied und den Eingängen der Teilnehmer ist eine Signalaufbereitungsschaltung (SA) angeordnet, die das Ausgangssignal hinsichtlich der Pulsform an die Eingangssignale angleicht,
zwischen dem Ausgang der Signalaufbereitungsschaltung (SA) und zumindest einem Teil der Teilnehmer sind zur bedarfsweisen Abtrennung von Busteilnehmern weitere Entscheidungsglieder angeordnet.

2. Datenbus nach Anspruch 1, **dadurch gekennzeichnet, dass** zumindest ein Teil der Teilnehmer über eine optische Übertragungsstrecke mit nach- bzw. vorgeschaltetem opto-elektrischen Wandlern am Sternkoppler angeschlossen ist.

## Claims

1. A data bus for a number of subscribers (Tₙ, Tₙ₊₁) who exchange data telegrams via at least one electric line, **characterised by** the following features:
the data bus is star-shaped and has a star coupler (K),
the input signals of the star coupler are in electric form,
the star coupler contains a logic decision element (1),
the outputs (Dᵢ) of the subscribers are connected to the inputs of the decision element and the output signals therefrom are conveyed as input signals to the decision element;
the output of the decision element is connected by an electric line in parallel inside the star coupler to the inputs (Dᵢ) of the subscribers,
a signal processing circuit (SA) is disposed between the decision element and the inputs of the subscribers and adapts the pulse shape of the output signal to the input signals, and
additional decision elements are provided between the output of the signal processing circuit (SA) and at least some of the subscribers, in order to disconnect subscribers when required.

2. A data bus according to claim 1, **characterised in that** at least some subscribers are connected by an optical transmission line to downstream or upstream opto-electric transducers on the star coupler.

## Revendications

1. Bus de données pour plusieurs noeuds (Tₙ, T_{n + 1}) échangeant des télégrammes de données par l'intermédiaire d'au moins une ligne électrique,
**caractérisé en ce que**
- le bus de données à une structure en étoile et comporte un coupleur en étoile (K) qui reçoit les signaux d'entrée du coupleur en étoile sous une forme électrique ;
- le coupleur en étoile comporte un décideur logique (1) ;
- les entrées du décideur sont reliées aux sorties des noeuds et leurs signaux de sortie sont appliqués comme signaux d'entrée ;
- la sortie du décideur est reliée par une ligne électrique dans le système de couplage de façon parallèle aux entrées (DO) des noeuds ;
- entre le décideur et les entrées des noeuds, on a un circuit de traitement de signal (SA) qui adapte la forme des impulsions du signal de sortie à celles des signaux d'entrée ;
- entre la sortie du circuit de traitement de signal (SA) et au moins une partie des noeuds, on a d'autres décideurs pour le cas échéant couper des noeuds du bus.

2. Bus de données selon la revendication 1,
**caractérisé en ce qu'**
au moins une partie des noeuds est raccordée par un chemin de transmission optique avec des convertisseurs optoélectroniques installés en amont ou en aval, pour être reliés à un coupleur en étoile.
